(19) Europäisches Patentamt
European Patent Office
Office européen des brevets

(11) **EP 1 805 480 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(21) Anmeldenummer: **05804181.5**

(22) Anmeldetag: **26.10.2005**

(51) Int Cl.:
*G01B 11/24* (2006.01)    *G01B 9/02* (2006.01)
*G01N 21/47* (2006.01)

(86) Internationale Anmeldenummer:
**PCT/EP2005/011475**

(87) Internationale Veröffentlichungsnummer:
**WO 2006/048163 (11.05.2006 Gazette 2006/19)**

(54) **VERFAHREN UND VORRICHTUNG ZUR ERFASSUNG VON KONTURDATEN UND/ODER OPTISCHEN EIGENSCHAFTEN EINES DREIDIMENSIONALEN SEMITRANSPARENTEN OBJEKTS**

METHOD AND DEVICE FOR DETECTING THE CONTOUR DATA AND/OR OPTICAL CHARACTERISTICS OF A THREE-DIMENSIONAL SEMI-TRANSPARENT OBJECT

PROCEDE ET DISPOSITIF POUR L'ACQUISITION DE DONNEES DE CONTOUR ET/OU DES PROPRIETES OPTIQUES D'UN OBJECT TRIDIMENSIONNEL SEMI-TRANSPARENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.10.2004 DE 102004052933**
**23.12.2004 DE 102004063460**

(43) Veröffentlichungstag der Anmeldung:
**11.07.2007 Patentblatt 2007/28**

(73) Patentinhaber: **DeguDent GmbH**
**63457 Hanau-Wolfgang (DE)**

(72) Erfinder: **ERTL, Thomas**
**63303 Dreieich (DE)**

(74) Vertreter: **Stoffregen, Hans-Herbert**
**Patentanwalt**
**Friedrich-Ebert-Anlage 11b**
**63450 Hanau (DE)**

(56) Entgegenhaltungen:
**US-A- 5 321 501**        **US-A- 5 962 852**
**US-A1- 2002 135 774**     **US-A1- 2003 072 007**
**US-A1- 2004 061 830**     **US-B1- 6 806 963**

- **WATANABE WATARU ET AL: "Coherence spectrotomography with white light continuum" PROC SPIE INT SOC OPT ENG; PROCEEDINGS OF SPIE - THE INTERNATIONAL SOCIETY FOR OPTICAL ENGINEERING 1998, Bd. 3261, 1998, Seiten 305-312, XP002376979**
- **DRESEL T ET AL: "THREE-DIMENSIONAL SENSING OF ROUGH SURFACES BY COHERENCE RADAR" APPLIED OPTICS, OSA, OPTICAL SOCIETY OF AMERICA, WASHINGTON, DC, US, Bd. 31, Nr. 7, 1. März 1992 (1992-03-01), Seiten 919-925, XP000248792 ISSN: 0003-6935**

**Beschreibung**

Die Erfindung bezieht sich auf ein Verfahren zur Erfassung von Konturdaten und/oder optischen Eigenschaften eines dreidimensionalen semitransparenten Objekts, insbesondere eines semitransparenten Objekts im Dentalbereich wie Zahn oder Zahnrestauration, auf der Basis einer Interferenz- und/oder Autokorrelationsmessung, wobei

- ein Strahlenbündel von mindestens einer Lichtquelle kurzer Kohärenzlänge erzeugt wird,
- das Strahlenbündel durch einen Strahlteiler geführt und vorzugsweise über ein Fokussieroptik auf das Objekt geleitet wird,
- in dem Strahlteiler aus dem Strahlenbündel ein Referenzstrahl abgespalten und von einem entlang des Referenzstrahls verschiebbaren Referenzspiegel reflektiert wird, wobei durch Verschieben des Referenzspiegels eine Position einer Signalgewinnungsfläche relativ zum Objekt festgelegt wird, und
- die vom Objekt und vom Referenzspiegel reflektierte Strahlung in dem Strahlteiler zusammengeführt und in einem Pixel aufweisenden Bildsensor überlagert wird, wobei beim Durchfahren der Signalgewinnungsfläche durch das Objekt zeitlich und/oder räumlich veränderte Signalmuster erfassbar sind,

Ferner nimmt die Erfindung Bezug auf eine Vorrichtung zur Erfassung von Konturdaten und/oder optischen Eigenschaften eines dreidimensionalen semitransparenten Objektes, insbesondere eines semitransparenten Objekts im Dentalbereich wie Zahn oder Zahnrestauration, umfassend mindestens eine Lichtquelle kurzer Kohärenzlänge zur Erzeugung eines Strahlenbündels, einen das Strahlenbündel zum einen in einen vorzugsweise über eine Fokussieroptik auf das Objekt leitenden Strahlungsanteil und zum anderen in einen auf einen verstellbaren Referenzspiegel leitenden Strahlungsanteil aufspaltenden Strahlteiler sowie einen Pixel aufweisenden Bildsensor, der mit von dem Objekt und von dem Referenzspiegel reflektierte und von dem Strahlteiler zusammengeführter Strahlung beaufschlagbar ist.

Ein Verfahren der oben genannten Art ist beispielsweise in der DE-A-43 09 056 beschrieben. Bei dem bekannten Verfahren handelt es sich um ein interferometrisches Verfahren zur Ermittlung der Entfernung und der Streuintensität von streuenden Punkten. Diese werden von einer breitbandigen, räumlich partiellen kohärenten Lichtquelle beleuchtet und befinden sich in einem Arm eines Interferometers. Als Lichtquelle wird beispielsweise eine Glühlampe oder eine Superlumineszenzdiode angegeben. Am Ausgang des Interferometers wird das Licht in ein Spektrum zerlegt und aus der Helligkeitsverteilung im Spektrum wird die Information über die Entfernung und die Streuintensität ermittelt. Nachteilig an dem beschriebenen Verfahren ist, dass die Auflösung in z-Richtung, d. h. in die Tiefe des Objektes begrenzt ist.
In dem Aufsatz von Prof. Dr. G. Häusler: ""KOHÄRENZRADAR" - ein optischer 3D-Sensor mit einer Genauigkeit von 1 μm", INFO BÖRSE LASER, Nr. 36/April 1999, VDI Technologiezentrum, wird ein Verfahren und eine Vorrichtung zur Vermessung einer Oberflächengestalt beschrieben. Das Messprinzip beruht auf Weißlicht-Interferometrie, wobei durch eine besondere Beleuchtung gezielt lokale Speckle erzeugt werden, so dass sich auch verschiedenste optisch raue Objekte, wie gefräste Flächen oder Gummi, sogar menschliche Haut, interferometrisch vermessen lassen. Nach dem Verfahren vergleicht man im Prinzip die Weglänge des Lichtes für jeden Objektpunkt mit der Länge des korrespondierenden Referenzweges im Interferometer. Nur wenn die Weglängen annähernd gleich sind, entsteht ein Interferenzkontrast im entsprechenden Bildpunkt. Während der Sensor sich auf das Objekt zubewegt, wird der Zeitpunkt des maximalen Interferenzkontrastes für jeden Bildpunkt individuell bestimmt und die jeweilige Sensorposition abgespeichert.
Aus der DE-A-40 34 007 ist ein Verfahren und eine Vorrichtung bekannt, wobei zur Gewinnung von dreidimensionalen Daten zur Vermeidung störender Streustrahlung aus der Tiefe eines semitransparenten Objekts wie beispielsweise eines Zahns oder eines zahnärztlichen Füllstoffes eine Beschichtung des Objekts vorgesehen ist, die diese Streustrahlung verhindert. Diese Schicht muss jedoch durch den Zahnarzt aufgetragen werden, ist also ein zusätzlicher Arbeitsschritt, der zudem im Falle eines Einpuderns größerer Areale des Zahnkranzes zu Reizungen der Atemwege des Patienten durch Aspiration der Staubartikel führen kann.
In der US-B-6,697, 194 wird ein Verfahren und eine Vorrichtung beschrieben, wobei der Einfluss der Streustrahlung durch eine konfokale Optik reduziert wird. Bei diesem Verfahren wird ein Array aus einfallenden Lichtstrahlen in einen optischen Strahlengang eingeleitet, der durch eine Fokussierungsoptik auf eine Probenfläche geleitet wird. Die Fokussierungsoptik definiert eine oder mehrere Fokalebenen vor der Probenfläche in einer durch die Optik veränderbaren Position, wobei jeder Lichtstrahl seinen Fokus an einer von den einen oder mehreren Fokalebenen hat. Die Strahlen erzeugen eine Vielzahl von Leuchtpunkten auf der Kontur. Von jedem dieser Leuchtpunkte wird die Intensität erfasst. Die oben etwähnten Schritte werden mehrmals wiederholt, wobei jedes Mal die Position der Fokalebene relativ zu der Kontur verändert wird. Für jeden der Leuchtpunkte wird eine leuchtpunktspezifische Position ermittelt, die einer Position der jeweiligen Fokalebene entspricht, welche zu einer maximalen gemessenen Intensität eines jeweiligen reflektierten Lichtstrahls führt. Auf der Basis der ermittelten leichtpunktspezifischen Positionen werden Daten generiert, die die Topologie der Kontur repräsentieren.
Die beschriebene Vorrichtung zur Erfassung einer Oberflächentopologie eines Bereichs einer dreidimensionalen Struktur umfasst eine Probe mit einer abzutastenden Kontur. Ferner ist eine Lichtquelle zur Erzeugung eines Arrays einfallender Lichtstrahlen, welche zu der Struktur entlang eines optischen Pfads übertragen werden, vorgesehen, um Leuchtpunkte auf dem Bereich zu erzeugen. Eine Licht fokussierende Optik definiert eine oder mehrere Fokalebenen vor der Probenstruktur in einer Position, die durch die Optik veränderbar ist. Jeder Lichtstrahl hat seinen Fokus auf einer der mehreren Fokal ebenen. Des Weiteren ist ein Verschiebungsmechanismus mit der Fokusoptik gekoppelt, um diese relativ zu der Struktur entlang einer Achse, die durch die einfallenden Lichtstrahlen definiert ist, zu verschieben. Des Weiteren ist ein Detektor vorgesehen, mit einem Array von Sensorelementen zur Messung der Intensität jedes einer Vielzahl von Lichtstrahlen, die von den Leuchtpunkten entgegengesetzt zu dem einfallenden Licht reflektiert werden. Ein Prozessor ist mit dem Detektor gekoppelt, um für jeden Lichtstrahl eine leuchtpunktspezifische Position zu ermitteln. Da ein reflektierter Lichtstrahl die Maximalintensität erreicht, wenn sich die Reflektionsposition in der Fokalebene befindet, kann damit seine spezifische Position ermittelt werden. Auf der Basis der ermittelten leuchtpunktspezifischen Positionen werden Daten der Topologie des Bereiches erzeugt.

Durch Anwendung einer aus der oben genannten US 6,697,194 B1 bekannten konfokalen Optik kann der Einfluss der Streustrahlung deutlich reduziert werden.

Der WO-A-95/33971 ist ein Verfahren und eine Vorrichtung zur Messung der Konturdaten eines Objektes zu entnehmen. Dabei wird das Interferometerprinzip verwendet, wobei eine Lichtquelle kurzer Kohärenzlänge eingesetzt wird. Um das Objekt in hinreichender räumlicher Ausdehnung mit Licht zu beaufschlagen, besteht die Möglichkeit, das von einer Lichtquelle stammende Licht aufzuweiten. Die in dem Strahlenbündel verlaufenden Lichtstrahlen sind jedoch nicht voneinander getrennt, sondern überlagern sich zum Teil.

Aus der US-A-5,321,501 ist ein Verfahren zur Messung von Dimensionierungen oder optischen Eigenschaften biologischer Proben bekannt, wobei gleichfalls das Interferometerprinzip zur Anwendung gelangt. Nach einer Ausführungsform können schnell veränderliche biologische Proben gleichzeitig mit Strahlung verschiedener optischer Quellen beaufschlagt werden. Jeder Strahlenquelle ist ein Detektor zugeordnet. Durch diese Maßnahmen sollen parallel und gleichzeitig mehrere Bereiche der Probe gescannt werden.

Der vorliegenden Erfindung liegt die Aufgabe zu Grunde, ein Verfahren und eine Vorrichtung der eingangs genannten Art so weiterzubilden, dass eine genaue Oberflächenerfassung und im gewünschten Umfang eine Ermittlung der optischen Eigenschaften des Objekts erfolgen kann. Gleichzeitig soll eine Anpassung an die Gegebenheiten der Objektgeometrie und der optischen Eigenschaften insoweit erfolgen, dass die Strahlen im gewünschten Umfang einstellbar sind.

Verfahrensmäßig wird die Aufgabe im Wesentlichen dadurch gelöst, dass das Strahlenbündel vor Auftreffen auf den Strahlteiler in räumlich beabstandete parallele Einzellichtstrahlen aufgeteilt wird oder ist, wobei die Einzellichtstrahlen einen Abstand derart zueinander aufweisen, dass ein Auftreffen von reflektierten Einzellichtstrahlen auf unmittelbar aneinandergrenzende Pixel des Bildsensors unterbleibt. Mit den übrigen, nicht von Einzelstrahlen beleuchteten Pixeln wird die durch ein semitransparentes Objekt erzeugte Streustrahlung detektiert.

Während nach der DE-A-43 09 056 das Objekt mit einer kontinuierlichen Beleuchtung, d. h. mit einem nicht unterbrochenen, gleichförmigen Strahlenbündel bestrahlt wird, wodurch eine aufwendige Auswertung erforderlich ist, wird erfindungsgemäß mit einem Raster von beabstandeten Lichtstrahlen gearbeitet, d. h. mit einem Strahlenbündel paralleler Lichtstrahlen, so dass Streuungen innerhalb des zu messenden Objekts zwischen den reflektierten Strahlen detektierbar sind und die benachbarten Strahlen nicht beeinflusst werden. Dabei ist insbesondere vorgesehen, dass der Abstand der Einzellichtstrahlen derart eingestellt wird, dass zwei unmittelbar benachbarte Einzellichtstrahlen auf Pixeln oder Pixelbereichen auftreffen, zwischen denen zumindest ein Pixel, vorzugsweise zwei bis fünf Pixel, unmittelbar von einem reflektierten Lichtstrahl unbeaufschlagt sind.

Erfindungsgemäß ist folglich vorgesehen, dass jedes von einem reflektierten Einzellichtstrahl illuminierte Pixel bzw. jede entsprechend illuminierte Pixelgruppe von einem primär nicht illuminierten Bereich umgeben ist, der wiederum im Falle des Auftretens von Streulicht beleuchtet sein kann. Ungeachtet dessen wird dieser von Streulicht beaufschlagte Bereich als von einem reflektierten Einzellichtstrahl unbeaufschlagter Pixel bzw. Pixelbereich bezeichnet.

Somit ist aufgrund der erfindungsgemäßen Lehre eine überaus präzise Erfassung der Kontur des zu messenden Objekts möglich, wobei es sich nicht nur um feste Objekte, sondern auch um flexible handeln kann, wie z. B. die Schleimhaut.

Bei der Lichtquelle kann es sich um weißes Licht handeln. Alternativ kann das Licht auch von zumindest einer superlumineszenten Diode oder einem Array aus einzelnen oder mehreren superlumineszenten Dioden oder zumindest einer breitbandigen Hochleistungsleuchtdiode oder einem Array aus einzelnen oder mehreren relativ breitbandigen Hochleistungsleuchtdioden erzeugt werden. Ebenso ist eine Kombination mehrerer Laserdioden mit gegeneinander versetzter Zentralwellenlänge möglich, wobei ein Wellenlängenversatz im Bereich von 5nm bis 150 nm, bevorzugt im Bereich von 10 nm bis 50 nm liegen kann.

Vorzugsweise liegt die Kohärenzlänge $I_c$ der verwendeten Lichtquellen im Bereich $2 \leq I_c \leq 20 \ \mu m$, bei einer Emissionsleistung $P_E$ der Lichtquellen im Bereich $1 \leq PE \leq 100$ mW vorzugsweise $3 \leq P_E \leq 50$ mW.

Abweichend vom Stand der Technik können nach dem erfindungsgemäßen Verfahren sowohl Oberflächen- als auch Tiefeninformationen, und zwar durch Auswahl der geeigneten Wellenlänge, bei der der Streukoeffizient des Objekts entsprechend hoch oder niedrig ist, gewonnen werden. Bei Messungen mit Licht im nahen Infrarot wird die Streuung geringer, da diese mit zunehmender Wellenlänge abnimmt.

Gemäß einer bevorzugten Verfahrensweise ist vorgesehen, dass Licht kurzer Kohärenzlänge einer einzelnen oder mehrerer Lichtquellen über einen Beamexpander aufgeweitet und auf ein Linsenarray projiziert wird, das daraus eine Vielzahl paralleler Einzelstrahlen erzeugt. Das Linsenarray kann eine Vielzahl von gitterförmig angeordneten Linsen aufweisen, über die das auftreffende Strahlenbündel in die gewünschten beabstandeten und parallel zueinander verlaufenden Einzellichtstrahlen aufgeteilt wird. Die parallelen Einzelstrahlen laufen durch einen Strahlteiler, einen Beamshifter und über eine axial verschiebbare Fokussieroptik zum Objekt, dessen Geometriedaten gemessen werden sollen. Der Beamshifter dient dazu, das Strahlenbündel um Bruchteile des Abstands zwischen zwei Einzelstrahlen zu verschieben, um so die Auflösung zu erhöhen.

In einer bevorzugten Ausführungsform ist der Beamshifter als planare Platte ausgebildet, die senkrecht zur Strahlrichtung in X- und Y-Richtung leicht verkippt werden kann.

Im Strahlteiler wird ein Referenzstrahl aufgespalten und an einem Referenzspiegel reflektiert. Der Referenzspiegel ist in Strahlrichtung, also in axialer Richtung verschiebbar angeordnet und legt mit der Länge eines Referenzarms eine Signalgewinnungsfläche, idealerweise eine Ebene, in einem Messarm des Interferometers fest. Diese kann identisch sein mit der Fokusebene der Fokussieroptik, kann jedoch auch von dieser verschieden sein, um weitere Informationen zum Streuverhalten des semitransparenten Objekts für die anschließende Bildverarbeitung zu gewinnen.

In dem Strahlteiler werden die vom Objekt und vom Referenzspiegel reflektierten Einzellichtstrahlen zusammengeführt und in dem Detektor überlagert. Liegen die Weglängenunterschiede des Referenzarms und des Messarms im Bereich der Kohärenzlänge der verwendeten Lichtquelle zeigen sich bei axialer Bewegung des Referenzarmspiegels Maxima und Minima auf dem Detektor.

Mit einem multiplanaren Wellenleitelement als Strahlteiler sind gleiche technische Möglichkeiten gegeben.

Gemäß einer alternativen Ausführungsform kann die Vielzahl von Einzelstrahlen direkt in einem VCSEL-Array (vertical cavity surface emitting laser) erzeugt werden. Dies hat den Vorteil der einzelnen Adressierbarkeit der Einzelstrahlen.

Eine Weiterführung des erfindungsgemäßen Verfahrens sieht vor, dass die Strahlführung auch durch dispersionsarme Monomodefaserbündel realisiert werden kann. Dabei wird die Lichtquelle nach Expansion in eine Vielzahl parallel geführter Fasern eingekoppelt. Die Auskopplung erfolgt ebenfalls über eine Fokussieroptik. Die Funktionen des Strahlteilers übernehmen in diesem Fall Faserkoppler.

Es kann eine Differenzmessung mit mindestens zwei verschiedenen Wellenlängen durchgeführt werden. Erfindungsgemäß können diese Messungen mit Wellenlängen durchgeführt werden, bei denen das semitransparente Objekt jeweils einen sehr unterschiedlichen Streu- und Absorptionskoeffizienten aufweist, um daraus ein Differenzbild zu erstellen.

Zur Verbesserung des Signal-Störsignalverhältnisses ist vorgesehen, dass eine Vielzahl von Frames, d.h., der gesamte Bildinhalt des Bildsensors einer definierten Zeitperiode (Sampling-Zeit) beim Durchfahren des Referenzarms im Speicher eines an den Bildsensor angeschlossenen Bildverarbeitungsrechners abgelegt und miteinander verrechnet werden.

Eine Vorrichtung der eingangs genannten Art, durch die der Erfindung zu Grunde liegende Aufgabe gelöst wird, zeichnet sich dadurch aus, dass zwischen der Lichtquelle und dem Strahlteiler ein das Strahlenbündel in räumlich beabstandete parallele Einzellichtstrahlen aufteilendes optisches Element angeordnet ist oder die Lichtquelle zur Erzeugung des aus einer Vielzahl paralleler Einzellichtstrahlen bestehenden Strahlenbündels ausgebildet ist, wobei die Einzellichtstrahlen einen Abstand derart zueinander aufweisen, dass ein Auftreffen von reflektierten Einzellichtstrahlen auf unmittelbar aneinander grenzenden Pixeln des Bildsensors unterbleibt.

Ausgestaltungen ergeben sich aus den abhängigen Ansprüchen.

Erfindungsgemäß wird ein Verfahren bzw. eine Vorrichtung zur Erfassung optischer und geometrischer Eigenschaften dreidimensionaler, semitransparenter Objekte insbesondere des Dentalbereichs, wie Zähne, Kompositmaterialien, Verblendkeramiken, durch Anwendung einer Interferenz und/oder Autokorrelationsmessung mit zumindest einer Lichtquelle kurzer Kohärenzlänge vorgeschlagen, das sich durch nachstehende Merkmale bzw. Merkmalsgruppen auszeichnet:

- ein Raster von definiert beabstandeten Lichtstrahlen, d. h. einem Strahlenbündel paralleler Lichtstrahlen wird verwendet, so dass Streuungen innerhalb des zumessenden Objekts zwischen den reflektierten Strahlen detektierbar sind und die benachbarten Strahlen nicht beeinflusst werden,

- am Bildsensor wird gleichzeitig nur eine Untermenge von verfügbaren Pixeln direkt von einem korrespondierendem Lichtstrahl beleuchtet (mindestens ein unbeleuchteter Pixel Abstand zwischen den beleuchteten Pixeln). Rund um jedes illuminierte Pixel bzw. jede Pixelgruppe (im Fall, dass ein Lichtpunkt mehrere nebeneinander liegende Pixel gleichzeitig beleuchtet) befindet sich ein primär nicht beleuchteter Bereich, der jedoch im Fall des Auftretens von Streulicht (im semitransparenten Objekt) auch beleuchtet wird,

- ein Beamshifter wird zur Verschiebung des Strahlenbündels um Bruchteile des Abstands der Einzelstrahlen verwendet, um durch eine Mehrzahl gegeneinander verschobener Messungen die Genauigkeit des Verfahrens zu erhöhen. Bevorzugte Ausführungsform des Beamshifters: planparallele Platte, die leicht verkippt wird. Eine Verschiebung erfolgt zwischen den Frames um Bruchteile des Abstandes der Beleuchtungsstrahlen,

- eine Kombination verschiedener Laserdioden mit versetzter Zentralwellenlänge wird verwendet, wobei ein Wellenlängenversatz von 5 nm bis 150 nm bevorzugt im Bereich 10 nm bis 50 nm liegen kann,

- durch geeignete Wahl der Wellenlänge, bei der der Streukoeffizient des Objekts entsprechend hoch oder niedrig ist, können Tiefen- oder Oberilächeninformationen gewonnen werden,

- eine Differenzmessung mit mindestens zwei verschiedenen Wellenlängen kann durchgeführt werden, bei denen das semitransparente Objekt jeweils ein sehr unterschiedliches Streu- und Absorptionsverhalten aufweist, um daraus ein Differenzbild zu erstellen,

- bei Nutzung des Spektral bereichs im nahen Infrarot, beispielsweise 750 nm bis 1000 nm, kann sodann verfügbare Tiefeninformation auch zur Kariesdiagnostik genutzt werden,

- falls zwei oder mehrere Wellenlängen simultan genutzt werden, kann eine RGB-Variante eines CMOS Sensors genutzt werden, die im roten, grünen und blauen Spektralbereich Empfindlichkeitsmaxima aufweist,

- die Signalgewinnungsfläche (Ebene mit maximalem Interferenzkontrast) kann mit der Fokusebene identisch, aber auch von dieser verschieden sein, um weitere Informationen zum Streuverhalten des semitransparenten Objekts für die anschließende Bildverarbeitung zu gewinnen,

- gemäß einer alternativen Ausführungsform kann die Vielzahl von Einzelstrahlen direkt in einem VCSEL-Array erzeugt werden kann. Dies hat den Vorteil der einzelnen Adressierbarkeit der Einzelstrahlen,

- eine Einkopplung von Licht in eine Vielzahl von Einzelfasern kann die Funktion des Strahlteilers übernehrnen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung der den Zeichnungen zu entnehmenden Ausführungsbeispielen. Dabei werden ausdrücklich auch Merkmale und Merkmalskombinationen nachfolgend beschriebener Ausführungsbeispiele beansprucht.

Es zeigen:

Fig. 1 einen prinzipiellen Aufbau einer Vorrichtung zur Erfassung von Konturdaten eines Objekts,

Fig. 2 eine Prinzipdarsteilüng zur Verdeutlichung eines Messprinzips,

Fig. 3 Kohärenzlänge der Lichtquelle in Abhängigkeit von deren Zentralwellenlänge,

Fig. 4 Streukoeffizient von Schmelz und Dentin in Abhängigkeit der Wellenlänge,

Fig. 5 Absorptionskoeffizient von Schmelz und Dentin in Abhängigkeit von der Wellenlänge,

Fig. 6 eine Prinzipdarstellung einer weiteren Anordnung zur Erfassung von Konturdaten eines Objekts,

Fig. 7 eine Prinzipdarstellung eines Sensorgehäuses und

Fig. 8 die Unterseite des Sensorgehäuses gemäß Fig. 7.

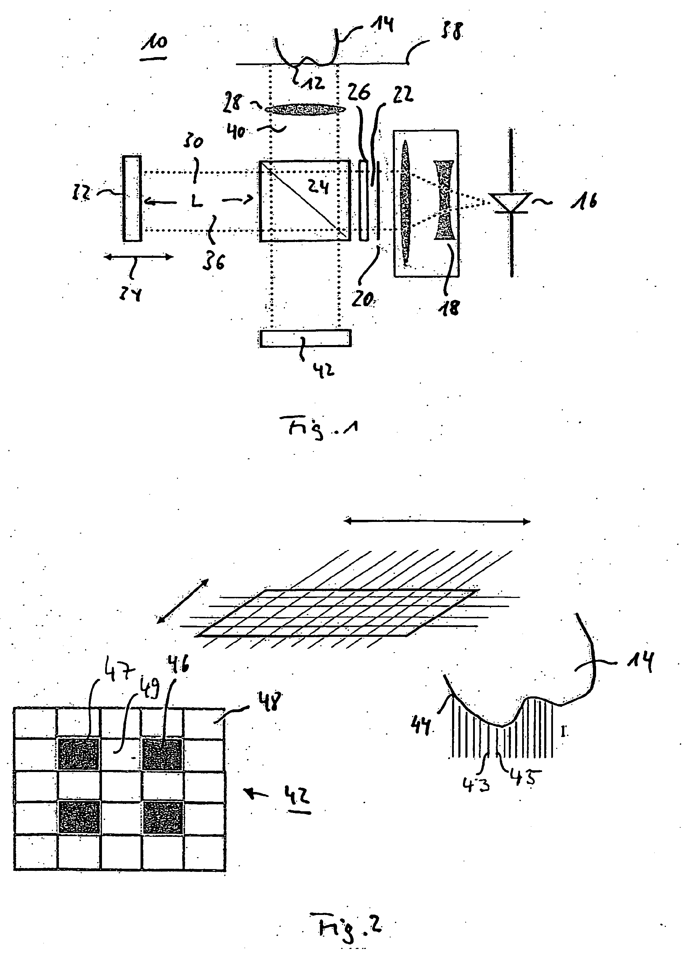

Fig. 1 zeigt einen schematischen Aufbau einer Vorrichtung 10 zur Erfassung von Konturdaten einer Freiformfläche 12 eines semitransparenten Objektes 14.

Das Licht einer Lichtquelle 16 kurzer Kohärenzlänge wird über einen Beam Expander 18 aufgeweitet und auf ein Linsenarray 20 projiziert, das daraus ein Strahlenbündel 22 einer Vielzahl paralleler Einzelstrahlen erzeugt. Diese laufen durch einen Beamshifter 26, einen Strahlteiler 24 und über eine axial verschiebbare Fokussieroptik 28 zum Objekt 14 wie Zahn, dessen Geometriedaten gemessen werden sollen.

Der Beamshifter 26 dient dazu, das Strahlenbündel 22 um Bruchteile des Abstands zwischen zwei Einzelstrahlen zu verschieben, um so die Auflösung zu erhöhen. Hierdurch besteht die Möglichkeit, das Strahlenbündel 22, d. h. dessen Einzellichtstrahlen insgesamt ortsmäßig zu verschieben, um somit auch Bereiche des Objekts 14 messen zu können, die möglicherweise bei anderen Auftreffpunkten der Einzellichtstrahlen nicht erfassbar sind.

Der Beamshifter 26 kann z. B. als planparallele Platte ausgebildet sein, die senkrecht zur Strahlrichtung in X und Y leicht verkippt werden kann.

Im Strahlteiler 24 wird ein Referenzstrahl 30 abgespalten und an einem Referenzspiegel 32 reflektiert. Der Referenzspiegel 32 ist in Richtung des Referenzstrahls 30, also in axialer Richtung gemäß Pfeil 34 verschiebbar angeordnet und legt mit der Länge L eines Referenzarms 36 eine Signalgewinnungsfläche 38, idealerweise eine Ebene, in einem Messarm 40 eines Interferometers fest. Diese kann identisch sein mit einer Fokusebene der Fokussieroptik 28, kann jedoch auch von dieser verschieden sein, um weitere Informationen zum Streuverhalten des semitransparenten Objekts 14 für die anschließende Bildverarbeitung zu gewinnen. Auf dem Rückweg vom Objekt 14 werden im Strahlteiler 24 die vom Objekt 14 reflektierten Einzellichtstrahlen und die vom Referenzspiegel 32 reflektierten Einzellichtstrahlen, also beide Lichtpfade zusammengeführt und in einem Bildsensor 42 überlagert.

Die Signalgewinnungsfläche 38 ist die Ebene mit maximalem Interferenzkontrast bzw. sollte diese sein.

Liegen die Weglängenunterschiede des Referenzarms 36 und des Messarms 40 im Bereich der Kohärenzlänge der verwendeten Lichtquelle 16, zeigen sich bei axialer Bewegung des Referenzarmspiegels 32 Minima und Maxima auf dem Bildsensor 42.

Fig. 2 zeigt eine rasterförmige Verteilung von Beleuchtungspünkten 44 auf dem Messobjekt 14 sowie auf dem Bildsensor 42. Am Bildsensor wird gleichzeitig nur eine Untermenge 46, 47 von verfügbaren Pixeln 48 direkt von einem korrespondierenden Lichtstrahl 43, 45 beleuchtet. Eine Verschiebung des Rasters erfolgt zwischen den Frames um Bruchteile des Abstands der Beleuchtungsstrahlen.

Die Vielzahl der parallelen Einzelstrahlen 43, 45 (Beleuchtungsraster) werden so korrespondierend zentriert auf jeweils ein oder wenige Pixel 46, 47 des Bildsensors 42 abgebildet. Rund um jedes illuminierte Pixel 46, 47 bzw. jeder Pixelgruppe befindet sich ein primär nicht illuminierter Bereich (z. B. Pixel 49), der jedoch im Fall des Auftretens von Streulicht ebenfalls beleuchtet wird, was bei einem semitransparenten Objekt der Normalfall ist. Damit wird das Signal - Störsignalverhältnis verschlechtert.

Um dennoch dreidimensionale Daten der Oberfläche 12 des Objekts 14 gewinnen zu können, wird erfindungsgemäß eine Vielzahl von Frames, d. h. der gesamte Bildinhalt des Bildsensors 42 einer definierten Zeitperiode (Samplingzeit) beim Durchfahren des Referenzarms 36 im Speicher eines an den Bildsensor 42 angeschlossenen Bildverarbeitungsrechner abgelegt und miteinander verrechnet.

Kennt man eine Stellung des Referenzarms 36 in dem definitiv kein Messsignal des Objekts 14 vorliegen kann (z.B. in der kürzesten Stellung des Referenzarmes, bei dem die Messebene 38 kurz oberhalb des Objektes 14 liegt), kann davon ausgegangen werden, dass Restsignale, die dennoch aufgetreten sind, Störsignale sind und können als solche klassifiziert werden. Bewegt man die Signalgewinnungsfläche 38 durch Verschieben des Referenzspiegels 32 weiter in Richtung des Messobjekts 14, entsteht irgendwann ein Schnittpunkt bzw. eine Schnittlinie ggf. auch eine Schnittfläche zwischen Signalgewinnungsfläche 38 und der Objektkontur 12. Dann kommt es an den korrespondierenden Pixeln des Bildsensors 42 zu charakteristischen Intensitätsschwankungen, die sich in von Frame zu Frame wechselnden Bildmustern ausdrücken. Die beim Verfahren eher statischen Intensitätsverteilungen können dagegen abgegrenzt werden. So kann beim Durchfahren der Signalgewinnungsfläche durch das Messobjekt durch Verknüpfen der zeitlich - räumlichen Signalmuster der konsekutiven Frames ein Helligkeitsmustersensor aufgebaut werden.

Zur Oberflächenkonturdatenextraktion wird a-priori Wissen in Form einer Datenbank genutzt, die typische Kombinationen aus Streu-, Absorptions- und Anisotropiefaktoren, der entsprechenden semitransparenten Materialien enthalten. Damit wird die zu erwartende Streulichtverteilung berechnet. Ein Berechnungsverfahren, das die optischen Eigenschaften semitransparenter Gewebe beschreibt, ist z. B. in der Dissertation von Weniger K., FU Berlin 2004, beschrieben.

Ebenso wird, soweit die zu erwartende Kontur bekannt ist, also einer bestimmten Konturklasse zugeordnet werden kann, dies dazu genutzt, Daten mit Prioritäten zu versehen.

Der Ablauf der Messung wird von einem Microcontroller gesteuert. Dies beinhaltet das Verschieben der Fokussieroptik und des Referenzarmspiegels, wie auch die Bewegung des Beamshifters.

3 D Konturdaten, die teilüberlappend von verschiedenen Positionen des Bildsensors aus aufgenommen werden, werden mittels Software zu einem Gesamtdatensatz kombiniert.

Aus den extrahierten Konturdaten des gemessenen Objekts wird ein STL-File erstellt, der mit geeigneten CAD/CAM Systemen weiterbearbeitet werden kann.

Die vorliegende Erfindung beschreibt eine Vorrichtung und ein Verfahren zur Gewinnung von 3D Daten semitransparenter Objekte durch Anwendung von Interferenzmessung / Autokorrelationsmessungen mit Lichtquellen kurzer Kohärenzlänge. Dies kann im Extremfall weißes Licht sein, jedoch auch von einer oder einem Array superlumineszenter Dioden, oder von einer oder einem Array mehrerer relativ breitbandiger Hochleistungsleuchtdioden stammen. Ebenso ist eine Kombination mehrerer Laserdioden mit gegeneinander versetzter Zentralwellenlänge möglich. Der Wellenlängenversatz kann 5 - 150 nm, bevorzugt 10 - 50 nm betragen.

Die Kohärenzlänge $l_c$, die bestimmend ist für die longitudinale Auflösung einer ORT Messung (Optische Kohärenz Tomografie), ist für eine gaußförmige Spektral verteilung gegeben durch:

$$l_c = \frac{2\ln 2}{\pi} \frac{\lambda^2}{\Delta\lambda}.$$

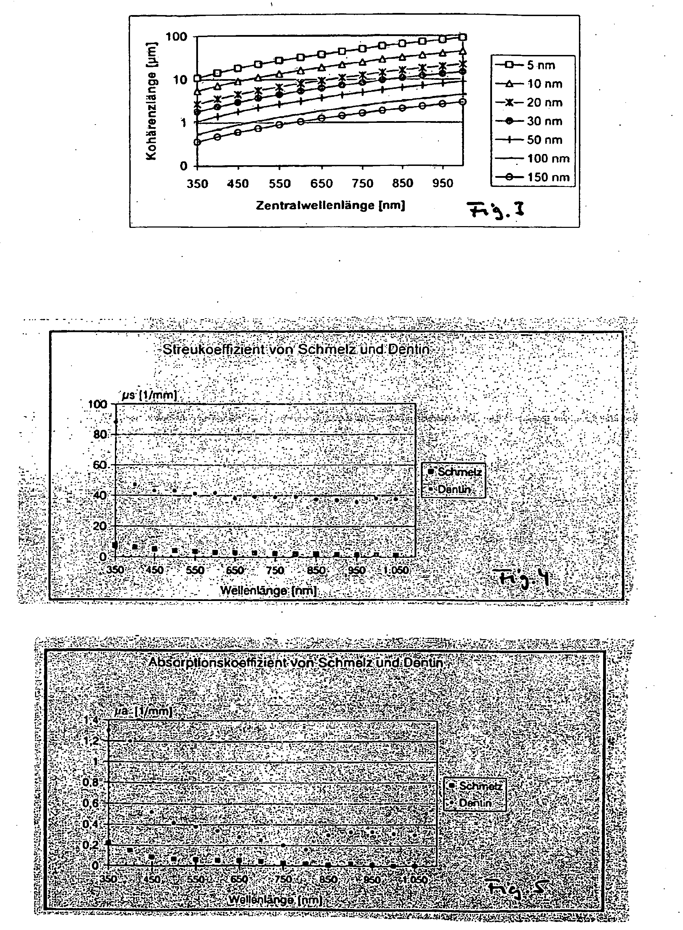

Die Kohärenzlänge sollte bevorzugt im Bereich 2- 20 μm liegen, bei Emissionsleistungen im Bereich 1 bis 100 mW bevorzugt 3 - 50 mW. Ein Zusammenhang zwischen der Zentralwellenlänge und der Bandbreite (FWHM) der Lichtquelle und der Kohärenzlänge ist in Fig. 3 dargestellt.

Abweichend vom Stand der Technik soll in dem beschriebenen Verfahren lediglich die Oberflächeninformation gewonnen werden. Es können daher auch Lichtquellen mit Wellenlängen gewählt werden, bei denen der Streukoeffizient des Objekts hoch ist. Damit wird eine Differenzmessung mit mindestens zwei verschiedenen Wellenlängen möglich.

Erfindungsgemäß können dies zwei Messungen mit Wellenlängen sein, bei denen das semitransparente Objekt 14 jeweils sehr unterschiedliche Streu- und Absorptionskoeffizienten aufweist, um daraus ein Differenzbild zu erstellen.

Im Falle eines hohen Streukoeffizienten wird sich dann im Nahfeld des Beleuchtungspunktes ein kleiner jedoch heller Streuhof bilden. Im Falle eines kleinen Streukoeffizienten wird sich das Streulicht weit im semitransparenten Medium ausbreiten jedoch im Nahfeld eine geringere Intensität aufweisen. Dies eröffnet erweiterte Auswertungsmöglichkeiten durch die Bildverarbeitungssoflware.

Im Falle von Zahnhartsubstanz liegt ein Wellenlängenbereich mit hohem Streukoefftzienten im blauen und ultravioletten Spektralbereich, wobei Wellenlängen unter 350 nm wegen der Gefahr der Induktion von DNA Strangbrüchen und Radikalbildung vermieden werden sollten. Der Streukoeffizient liegt im Fall von Zahnhartsubstanz im Bereich 8 - 90 l/mm bei Absorptionskoeffizienten im Bereich von 0,1 - 1,5 l/mm. Bei zahnärztlichen Füllungsmaterialien liegt der Streukoeffizient hier im Bereich 8 - 25 l/mm und der Absorptionskoeffizient bei 0,3 - 4 l/mm.

Wellenlängenbereiche geringer Streuung liegen dagegen für semitransparente Objekte im roten und infraroten Spektralbereich. Für Zahnhartsubstanz liegt der Streukoeffizient im Bereich von 1 - 40 l/mm für Zahnschmelz an der unteren Grenze und für Dentin im oberen Bereich. Füllungswerkstoffe liegen im Bereich 3 - 20 l/mm. Beispiele für Streukoeffizienten und Adsorptionskoeffizienten von Schmelz und Dentin sind den Fig. 4 und 5 zu entnehmen.

Limitierend im nahen Infrarot ist die abnehmende spektrale Empfindlichkeit des Detektors. Im Falle einer bevorzugten Ausführungsform fällt diese bei einem CMOS Sensor bei 1000 nm unter 5 %. Ebenfalls ist die Verwendung eines CCD Sensors möglich. Weiterhin lässt sich mit geeigneten Sensoren der Wellenlängenbereich ins Infrarot erweitern. Geeignet sind dazu beispielsweise In As- oder HgCdTe-Detektoren mit denen der Bereich 2, 5 bis 10 μm abgedeckt werden kann.

Falls der Spektralbereich des nahen Infrarot, beispielsweise 750 nm bis 1000 nm genutzt wird, kann die dann verfügbare Tiefeninformation auch zur Kariesdiagnostik genutzt werden. Falls zwei oder mehrere Wellenlängen simultan genutzt werden sollen, kann eine RGB - Variante eines CMOS- Sensors genutzt werden, die im roten, grünen und blauen Spektralbereich Empfindlichkeitsmaxima aufweist.

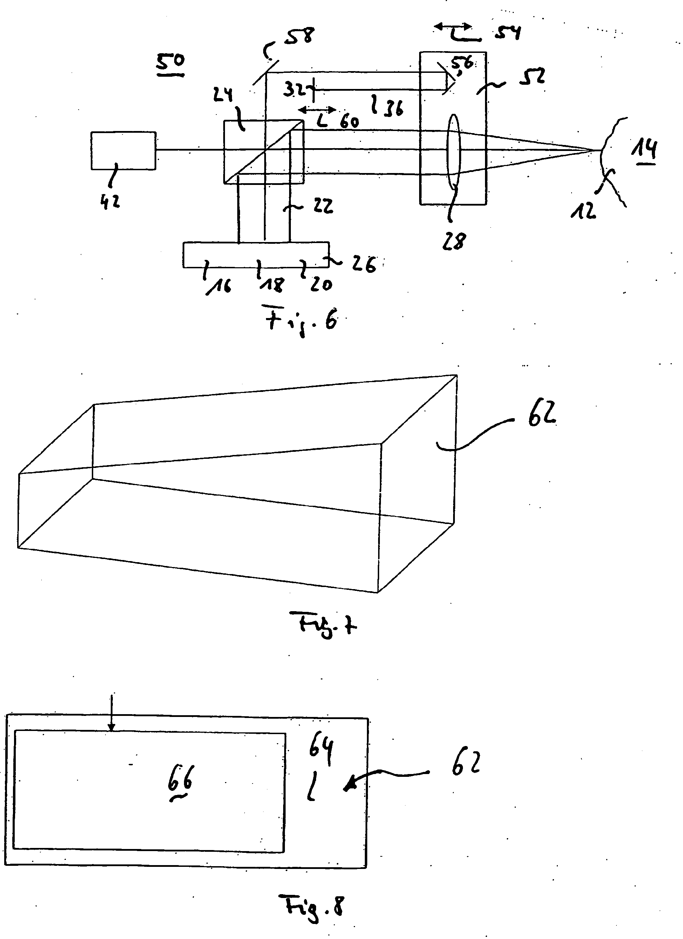

Fig. 6 zeigt eine schematische Darstellung einer alternativen Ausführungsform einer Vorrichtung 50 zur Erfassung von Konturdaten dreidimensionaler Objekte, wobei gleiche Elemente mit gleichen Bezugszeichen gekennzeichnet sind. In Erweiterung der Vorrichtung 10 gemäß Fig. 1 ist eine Mitlaufvorrichtung 52 vorgesehen, die eine simultane axiale Längenänderung des Referenzarms 36 beim Verschieben der Fokussierlinse 28 entlang des Pfeils 54 ermöglicht. Hierzu sind in der Mitlaufvorrichtung 52 Umlenkspiegel 56 angeordnet. Ein weiterer Umlenkspiegel 58 ist in Verlängerung des aus dem Strahlteiler 24 austretenden Lichtstrahls angeordnet, um eine Umlenkung des Lichtstrahls auf die in der Mitlaufvorrichtung angeordnete Spiegelanordnung 56 zu erreichen. Um bei dieser Anordnung dennoch eine Trennung der Fokusebene von der Signalgewirinungsebene zu ermöglichen, kann der Spiegel 32 vorzugsweise getrennt axial in Richtung des Pfeils 60 verschoben werden.

Fig. 7 zeigt eine Außenkontur eines Sensorgehäuses 62 zum Einsatz in der Zahnheilkunde zum intraoralen Scanning von Zähnen. Um ein komfortables Arbeiten im Mund eines Patienten zu ermöglichen, müssen sich die Abmessungen an die Anatomie des Patienten orientieren. Eine keilförmige Anordnung ist eine bevorzugte Ausführungsform.

Fig. 8 zeigt eine Unterseite 64 des Sensorgehäuses 62, in dem ein Scanfenster 66 angeordnet ist. Die Länge des Scanfensters 66 ermöglicht eine simultane Erfassung eines Quadranten.

**Patentansprüche**

1. Verfahren zur Erfassung von Konturdaten und/oder optischen Eigenschaften eines dreidimensionalen semitransparenten Objekts (14), insbesondere eines semitransparenten Objekts im Dentalbereich wie Zahn oder Zahnrestauration, auf der Basis einer Interferenz- und/oder Autokorrelationsmessung, wobei

   - ein Strahlenbündel (22) von mindestens einer Lichtquelle (16) kurzer Kohärenzlänge erzeugt wird,
   - das Strahlenbündel durch einen Strahlteiler (24) geführt und über eine Fokussieroptik (28) auf das Objekt (14) geleitet wird,
   - in dem Strahlteiler aus dem Strahlenbündel ein Referenzstrahl (30) abgespalten und von einem entlang des Referenzstrahls verschiebbaren Referenzspiegel (32) reflektiert wird, wobei durch Verschieben des Referenzspiegels eine Position einer Signalgewinnungsfläche (38) relativ zum Objekt (14) festgelegt wird, und
- die vom Objekt und vom Referenzspiegel reflektierte Strahlung in dem Strahlteiler zusammengeführt und in einem Pixel (46, 47, 49) aufweisenden Bildsensor (42) überlagert wird, wobei beim Durchfahren der Signalgewinnungsfläche durch das Objekt zeitlich und/oder räumlich veränderte Signalmuster erfassbar sind,

**dadurch gekennzeichnet,**
**dass** das Strahlenbündel (22) vor Auftreffen auf den Strahlteiler (24) in räumlich beabstandete parallele Einzellichtstrahlen (43, 45) aufgeteilt wird oder ist, wobei die Einzellichtstrahlen einen Abstand derart zueinander aufweisen, dass ein Auftreffen von reflektierten Einzellichtstrahlen auf unmittelbar aneinander grenzenden Pixeln (46, 49) des Bildsensors (42) unterbleibt.

2. Verfahren nach Anspruch 1,
**dadurch gekennzeichnet,**
**dass** der Abstand der Einzellichtstrahlen (43, 45) derart eingestellt wird, dass zwei unmittelbar benachbarte Einzellichtstrahlen auf Pixel (46, 47) bzw. Pixelbereiche auftreffen, zwischen denen zumindest ein Pixel, vorzugsweise 2 bis 5 Pixel unmittelbar von einem reflektierten Einzellichtstrahl unbeaufschlagt sind.

3. Verfahren nach Anspruch 1,
**dadurch gekennzeichnet,**
**dass** zur Bestimmung der Kontur bzw. der optischen Eigenschaften des Objekts (14) eine Differenzmessung mit mindestens zwei verschiedenen Wellenlängen durchgeführt wird, bei denen das Objekt jeweils unterschiedliche Streu- und Absorptionskoeffizienten aufweist.

4. Verfahren nach Anspruch 1,
**dadurch gekennzeichnet,**
**dass** eine Lichtquelle (16) mit einer Kohärenzlänge $1_c$ im Bereich von $2\ \mu m \leq 1_c \leq 20\ \mu m$ bei einer Emissionsleistung $P_E$ der Lichtquelle im Bereich von $1\ mW \leq P_E \leq 100\ mW$ vorzugsweise $3\ mW \leq P_E \leq 50\ mW$ verwendet wird.

5. Verfahren nach Anspruch 1,
**dadurch gekennzeichnet,**
**dass** als Lichtquelle (16) weißes Licht und/oder zumindest eine superlumineszente Diode und/oder ein Array von superlumineszenten Dioden und/oder zumindest eine breitbandige Hochleistungsleuchtdiode und/oder ein Array von mehreren breitbandigen Hochleistungsleuchtdioden verwendet wird.

6. Verfahren nach Anspruch 1,
**dadurch gekennzeichnet,**
**dass** das Licht kurzer Kohärenzlänge insbesondere bei Nutzung einer einzelnen Lichtquelle oder einer geringen Anzahl von Lichtquellen (16) über einen Beam-Expander (18) aufgeweitet und zur Erzeugung eines eine Vielzahl paralleler Einzellichtstrahlen aufweisenden Strahlenbündels (22) auf ein Linsenarray (20) projiziert wird.

7. Verfahren nach Anspruch 1 oder 6,
**dadurch gekennzeichnet,**
**dass** die Vielzahl von Einzelstrahlen direkt in einem VCSEL-Array erzeugt wird.

8. Verfahren nach Anspruch 1,
**dadurch gekennzeichnet,**
**dass** als Lichtquelle eine Kombination mehrerer Laserdioden mit gegeneinander versetzter Zentralwellenlänge verwendet wird, wobei ein Wellenlängenversatz $\Delta\lambda$ im Bereich $5\ nm \leq \Delta\lambda \leq 150\ nm$, vorzugsweise $10\ nm \leq \Delta\lambda \leq 50\ nm$, beträgt.

9. Verfahren nach Anspruch 1,
**dadurch gekennzeichnet,**
**dass** eine Vielzahl von während einer Zeitperiode d.h. Sampling-Zeit, beim Verfahren des Referenzspiegels (32) erfassten Bildinhalte, z.B. Signalmuster, des Bildsensors im Speicher eines Bildverarbeitungsrechners abgelegt und miteinander verrechnet werden.

10. Verfahren nach Anspruch 1;
**dadurch gekennzeichnet,**
**dass** das Strahlenbündel (22) mittels eines Beamshifters (26) um Bruchteile des Abstandes zwischen zwei Einzelstrahlen verschoben wird.

11. Verfahren nach Anspruch 10,
**dadurch gekennzeichnet,**
**dass** der als in der x-y Ebene planparallele Platte ausgebildete Beamshifter (26), die eine Ebene senkrecht zur Strahlrichtung darstellt, leicht verkippt wird.

12. Verfahren nach Anspruch 1,
**dadurch gekennzeichnet,**
**dass** als Bildsensor (42) ein CMOS-Sensor verwendet wird.

13. Verfahren nach Anspruch 1,
**dadurch gekennzeichnet,**
**dass** als Bildsensor (42) ein CCD-Sensor verwendet wird.

14. Verfahren nach Anspruch 1,
**dadurch gekennzeichnet,**

**dass** als Sensoren InAs- oder I-IgCdTe-Detektoren eingesetzt werden.

15. Verfahren nach zumindest einem der vorhergehenden Ansprüche,
    **dadurch gekennzeichnet,**
    **dass** eine im Spektralbereich des nahen Infrarot, vorzugsweise zwischen 700 nm - 1000 nm, emittierende Lichtquelle (16) verwendet wird.

16. Verfahren nach Anspruch 1,
    **dadurch gekennzeichnet,**
    **dass** zur simultanen Nutzung von zwei oder mehr Wellenlängen der Lichtstrahlen eine RGB-Variante eines CMOS-Sensors verwendet wird, wobei die dann zur Verfügung stehende Tiefeninformation auch zur Kariesdiagnostik verwendet werden kann.

17. Verfahren nach Anspruch 1,
    **dadurch gekennzeichnet,**
    **dass** die Strahlführung durch ein dispersionsarmes Monomodefaserbündel erfolgt, wobei das Licht der Lichtquelle nach Expansion in eine Vielzahl parallel geführter Fasern eingekoppelt und über eine Fokussieroptik ausgekoppelt wird.

18. Verfahren nach Anspruch 1,
    **dadurch gekennzeichnet,**
    **dass** zur Oberflächenkonturdatenextraktion a priori Wissen in Form von in einer Datenbank gespeicherten typischen Kombinationen aus Streu- , Absorptions- und Anisotropiefaktoren der entsprechenden semitransparenten Materialien verwendet wird.

19. Verfahren nach Anspruch 1,
    **dadurch gekennzeichnet,**
    **dass** die ermittelten Daten auf der Grundlage von Konturklassen für abzutastende Objekte bewertet, bzw. (gewichtet) (und/oder mit einer Priorität versehen werden.

20. Verfahren nach Anspruch 1,
    **dadurch gekenntzeichnet,**
    **dass** die Signalgewinnungsfläche (38), d.h. die Ebene mit maximalem Interferenzkontrast, mit der Fokusebene der Fokussieroptik (28) übereinstimmend eingestellt wird.

21. Verfahren nach Anspruch 1,
    **dadurch gekennzeichnet,**
    **dass** die Signalgewinnungsfläche (38) zur Gewinnung weiterer Informationen zum Streuverhalten des semitransparenten Objekts (24) für die anschließende Bildverarbeitung von von der Fokussieroptik (28) erzeugter Fokusebene abweicht.

22. Verfahren nach Anspruch 1,
    **dadurch gekennzeichnet,**

**dass** mit nicht unmittelbar von Einzellichtstrahlen (43, 45) beleuchteten Pixeln (49) Streustrahlung detektiert wird, die von dem semitransparenten Objekt (14) stammt.

23. Vorrichtung zur Erfassung von Konturdaten und/ oder optischen Eigenschaften eines dreidimensionalen semitransparenten Objektes (14), insbesondere eines semitransparenten Objekts im Dentalbereich wie Zahn oder Zahnrestauration, umfassend mindestens eine Lichtquelle (16) kurzer Kohärenzlänge zur Erzeugung eines Strahlenbündels (22), einen das Strahlenbündel zum einen in einen über eine Fokussieroptik (28) auf das Objekt leitenden Strahlungsanteil und zum anderen in einen auf einen verstellbaren Referenzspiegel (32) leitenden Strahlungsanteil aufspaltenden Strahlteiler (24) sowie einen Pixel (46, 47) aufweisenden Bildsensor (42), der mit von dem Objekt und von dem Referenzspiegel reflektierte und von dem Strahlteiler zusammengeführter Strahlung beaufschlagbar ist,
    **dadurch gekennzeichnet,**
    **dass** zwischen der Lichtquelle (16) und dem Strahlteiler (24) ein das Strahlenbündel (22) in räumlich beabstandeten parallelen Einzellichtstrahlen (43, 45) aufteilendes optisches Element (20) angeordnet ist oder die Lichtquelle (16) zur Erzeugung des aus einer Vielzahl paralleler Einzellichtstrahlen bestehenden Strahlenbündels (22) ausgebildet ist, wobei die Einzellichtstrahlen einen Abstand derart zueinander aufweisen, dass ein Auftreffen von reflektierten Einzellichtstrahlen auf unmittelbar aneinander grenzenden Pixeln (46, 49) des Bildsensors (42) unterbleibt.

24. Vorrichtung nach Anspruch 23,
    **dadurch gekennzeichnet,**
    **dass** die Lichtquelle (16) eine einzelne Lichtquelle oder mehrere Lichtquellen aufweist, wobei der einzelnen Lichtquelle oder den Lichtquellen ein Beam-Expander (18) zur Aufweitung des Strahlenbündels (22) und ein Linsenarray (20) zur Erzeugung des die mehreren parallelen Einzellichtstrahlen aufweisenden Strahlenbündels (22) nachgeordnet ist.

25. Vorrichtung nach Anspruch 23,
    **dadurch gekennzeichnet,**
    **dass** im Strahlengang des Strahlenbündels (22) vor dem Strahlteiler (24) ein Beamshifter (26) angeordnet ist.

26. Vorrichtung nach Anspruch 25,
    **dadurch gekennzeichnet,**
    **dass** der Beamshifter (26) als planparallele Platte ausgebildet ist, die senkrecht zur Strahlrichtung in X- und Y-Richtung leicht verkippbar ist.

27. Vorrichtung nach Anspruch 23,

**dadurch gekennzeichnet,**
**dass** die Lichtquelle (16) eine weißes Licht erzeugende Lichtquelle ist.

28. Vorrichtung nach Anspruch 23,
**dadurch gekennzeichnet,**
**dass** die Lichtquelle (16) eine superlumineszente Diode oder ein Array von superlumineszenten Dioden ist.

29. Vorrichtung nach Anspruch 23,
**dadurch gekennzeichnet,**
**dass** die Lichtquelle (16) eine Hochleistungsleuchtdiode oder ein Array mehrerer relativ breitbandiger Hochleistungsleuchtdioden ist.

30. Vorrichtung nach Anspruch 23,
**dadurch gekennzeichnet,**
**dass** die Lichtquelle (16) eine Kombination mehrerer Laserdioden mit gegeneinander versetzter Zentralwellenlänge ist, wobei der Wellenlängenversatz $\Delta\lambda$ im Bereich 5 nm $\leq \Delta\lambda \leq$ 150 nm vorzugsweise 10 nm $\leq \Delta\lambda \leq$ 50 nm beträgt.

31. Vorrichtung nach Anspruch 23,
**dadurch gekennzeichnet,**
**dass** die Kohärenzlänge der Lichtquelle (16) im Bereich von 2 $\mu$m$\leq I_e \leq$ 20 $\mu$m bei einer Emissionsleistung $P_E$ der Lichtquelle im Bereich von 1 mW $\leq P_E \leq$ 100 mW, vorzugsweise 3 mW $\leq P_E \leq$ 50 mW liegt.

32. Vorrichtung nach Anspruch 23,
**dadurch gekennzeichnet,**
**dass** die Lichtquelle (16) als VCSEL-Array ausgebildet ist.

33. Vorrichtung nach Anspruch 23,
**dadurch gekennzeichnet,**
**dass** die Vorrichtung eine Mitlaufvorrichtung (52) aufweist, die eine simultane axiale Längenänderung des Referenzarms (36) und eine Abstandsänderung zwischen dem Referenzspiegel (32) und dem Strahlteiler (24) beim Verschieben der Fokussierlinse (28) ermöglicht.

34. Vorrichtung nach Anspruch 33,
**dadurch gekennzeichnet,**
**dass** in der Mitlaufvorrichtung (52) eine Spiegelanordnung (56) zur Umleitung des Referenzstrahls vorgesehen ist.

35. Vorrichtung nach Anspruch 23,
**dadurch gekennzeichnet,**
**dass** der Beam-Expander (18) über eine Vielzahl parallel geführter Fasern wie dispersionsarmes Monomodebündel mit dem als Faserkoppler ausgebildeten Strahlteiler (24) verbunden ist.

36. Vorrichtung nach Anspruch 35,
**dadurch gekennzeichnet,**
**dass** der Strahlteiler (24) als multiplanares Wellenleitelement ausgebildet ist.

37. Vorrichtung nach Anspruch 23,
**dadurch gekennzeichnet,**
**dass** die von der Fokussieroptik (28) erzeugte Fokusebene mit einer von der von dem Referenzspiegel (32) reflektierten Strahlung erzeugten Signalgewinnungsfläche (38) d.h. die Ebene mit maximalem Interferenzkontrast, übereinstimmt oder abweicht.

**Claims**

1. Method for recording contour data and/or optical properties of a three-dimensional, semi-transparent object (14), especially a semi-transparent object in the dental area, such as a tooth or tooth restoration, on the basis of an interference and/or auto-correlation measurement, whereby

    - a bundle of rays (22) from at least one light source (16) of short coherence length is generated,
    - the bundle of rays is led through a beam splitter (24) and is guided to the object (14) via a focusing optical system (28),
    - a reference beam (30) is split off in the beam splitter from the bundle of rays and is reflected by a reference mirror (32) movable along the reference beam, whereby by moving the reference mirror, a position of a signal recovering surface (38) is fixed relative to the object (14), and
    - the radiation reflected from the object and from the reference mirror is brought together in the beam splitter and superimposed in an image sensor (42) having pixels (46, 47, 49), whereby temporally and/or spatially altered signal patterns can be recorded upon passing through the signal recovering surface,

    **characterized in**
    **that** the bundle of rays (22) is being or is subdivided before impinging upon the beam splitter (24) in spatially distanced parallel single light rays (43, 45), whereby the individual light rays have a spacing in relation to one another such that an impingement of reflected individual light rays on directly abutting pixels (46, 49) of the image sensor (42) does not occur.

2. Method according to claim 1,
    **characterized in**
    **that** the spacing of the individual light rays (43, 45) is adjusted such that two directly adjacent individual light rays impinge upon pixels (46, 47) or pixel regions between which at least one pixel, preferably 2 to 5 pixels are not acted upon directly by a reflected individual light ray.

3. Method according to claim 1,
**characterized in**
**that** a differential measurement with at least two different wave lengths is conducted to determine the contour or the optical properties of the object (14) in which the object in each case has different scatter and absorption coefficients.

4. Method according to claim 1,
**characterized in**
**that** a light source (16) with a coherence length $1_c$ in the range of $2\ \mu m \le l_c \le 20\ \mu m$ at an emission output $P_E$ of the light source in the range of $1\ mW \le P_E \le 100\ mW$, preferably $3\ mW \le P_E \le 50\ mW$ is used.

5. Method according to claim 1,
**characterized in**
**that** white light and/or at least one superluminescent diode and/or an array of superluminescent diodes and/or at least one broad band high performance diode and/or an array of several broad banded high performance diodes is used as the light source (16).

6. Method according to claim 1,
**characterized in**
**that** the light of short coherence length, especially when using a single light source or a small number of light sources (16), is expanded through a beam expander (18) and projected on a lens array (20) to generate a bundle of rays having a large number of parallel single light rays.

7. Method according to claim 1 or 6,
**characterized in**
**that** the plurality of single rays is generated directly in a VCSEL array.

8. Method according to claim 1,
**characterized in**
**that** a combination of several laser diodes with central wave lengths offset in relation to one another is used as a light source, whereby a wave length offset $\Delta\lambda$ lies in the range $5\ nm \le \Delta\lambda \le 150\ nm$, preferably $10\ nm \le \Delta\lambda \le 50\ nm$.

9. Method according to claim 1,
**characterized in**
**that** a plurality of image contents, e.g. single patterns, of the image sensor recorded during a period of time, i.e. sampling period, while moving the reference mirror (32) are stored in the memory of an image processing computer and cleared with one another.

10. Method according to claim 1,
**characterized in**
**that** the bundle of rays (22) is shifted using a beam shifter (26) by fractions of the spacing between two single rays.

11. Method according to claim 10,
**characterized in**
**that** the beam shifter (26) designed as plane-parallel plate in the x-y plane, which represents a plane perpendicular to the ray direction, is slightly tilted.

12. Method according to claim 1,
**characterized in**
**that** a CMOS sensor is used as image sensor (42).

13. Method according to claim 1,
**characterized in**
**that** a CCD sensor is used as image sensor (42).

14. Method according to claim 1,
**characterized in**
**that** InAs or HgCdTe detectors are used as sensors.

15. Method according to at least one of the preceding claims,
**characterized in**
**that** a light source (16) emitting in the spectral range of the near infrared, preferably between 700 nm-1000 nm, is used.

16. Method according to claim 1,
**characterized in**
**that** an RGB variant of a CMOS sensor is used for simultaneous use of two or more wavelengths of light rays, whereby the depth information then available can also be used for caries diagnosis.

17. Method according to claim 1,
**characterized in**
**that** the ray guidance happens through a dispersion-poor monomode fiber bundle, whereby the light of the light source is launched following expansion into a plurality of parallel guided fibers and is decoupled through a focusing optical system.

18. Method according to claim 1,
**characterized in**
**that** a priori knowledge in the form of typical combinations of scatter, absorption and anisotropy factors of the corresponding semi-transparent materials is used for surface contour data extraction.

19. Method according to claim 1,
**characterized in**
**that** the data ascertained on the basis of contour classes are evaluated and weighted, respectively, for objects to be scanned and/or provided with a priority.

20. Method according to claim 1,
**characterized in**
**that** the signal recovering surface (38), i.e. the plane with maximal interference contrast, is adjusted in correspondence with the focal plane of the focusing optical system (28).

21. Method according to claim 1,
**characterized in**
**that** the signal recovering surface (38) for recovering further information on the scatter behavior of the semi-transparent object (24) for the subsequent image processing deviates from the focal plane generated by the focusing optical system (28).

22. Method according to claim 1,
**characterized in**
**that** scattered radiation is detected by pixels (49) not directly illuminated by single light rays (43, 45) which originates from the semi-transparent object (14).

23. Device for recording contour data and/or optical properties of a three-dimensional, semi-transparent object (14), especially a semi-transparent object in the dental area such as a tooth or tooth restoration, including at least one light source (16) of short coherence length for generating a bundle of rays (22), a beam splitter (24) splitting the bundle of rays on the one hand into a radiation fraction leading to the object through a focusing optical system (28) and on the other hand into a radiation fraction leading to an adjustable reference mirror (32), as well as an image sensor (42) having pixels (46, 47), which can be acted upon by radiation reflected from the object and from the reference mirror and brought together by the beam splitter,
**characterized in**
**that** an optical element (20) subdividing bundle of rays (22) into spatially distanced parallel single light rays (43, 45) is arranged between the light source (16) and the beam splitter (24), or the light source (16) is designed for generating the bundle of rays (22) consisting of a pluralty of parallel single light rays, whereby the single light rays have a spacing from one another such that an impingement of reflected single light rays on directly abutting pixels (46, 49) of the image sensor (42) does not occur.

24. Device according to claim 23,
**characterized in**
**that** the light source (16) has a single light source or several light sources, whereby a beam expander (18) for expanding the bundle of rays (22) and a lens array (20) for generating the bundle of rays (22) having several parallel light rays is arranged downstream from the individual light source or the light sources.

25. Device according to claim 23,
**characterized in**
**that** a beam shifter (26) is arranged in the ray path of the bundle of rays (22) upstream the beam splitter (24).

26. Device according to claim 25,
**characterized in**
**that** the beam shifter (26) is designed as a plane-parallel plate which can be slightly tilted perpendicular to the ray direction in the X and Y direction.

27. Device according to claim 23,
**characterized in**
**that** the light source (16) is a light source generating white light.

28. Device according to claim 23,
**characterized in**
**that** the light source (16) is a superluminescent diode or an array of superluminescent diodes.

29. Device according to claim 23,
**characterized in**
**that** the light source (16) is a high performance light diode or an array of several relatively broad banded high performance light diodes.

30. Device according to claim 23,
**characterized in**
**that** the light source (16) is a combination of several laser diodes with offset central wave length in relation to one another, whereby the wave length offset $\Delta\lambda$ is in the 5 nm $\leq \Delta\lambda \leq$ 150 nm range, preferably 10 nm $\leq \Delta\lambda \leq$ 50 nm.

31. Device according to claim 23,
**characterized in**
**that** the coherence length of the light source (16) lies in the region of 2 $\mu$m$\leq I_c \leq$ 20 $\mu$m with an emission output $P_E$ of the light source in the region of 1 mW $\leq P_E \leq$ 100 mW, preferably 3 mW $\leq P_E \leq$ 50 mW.

32. Device according to claim 23,
**characterized in**
**that** the light source (16) is designed as VCSEL array.

33. Device according to claim 23,
**characterized in**
**that** the device has a tracking device (52) which allows a simultaneous axial change in length of the reference arm (36) and a spacing change between the reference mirror (32) and the beam splitter (24) when shifting the focusing lens (28).

34. Device according to claim 33,
**characterized in**

**that** a mirror arrangement (56) is provided in the tracking device (52) for deflecting the reference beam.

35. Device according to claim 23,
**characterized in**
**that** the beam expander (18) is connected with the beam splitter (24) designed as fiber coupler through a plurality of parallel guided fibers such as dispersion-poor monomode bundles.

36. Device according to claim 35,
**characterized in**
**that** the beam splitter (24) is constructed as a multiplanar wave guide element.

37. Device according to claim 23,
**characterized in**
**that** focal plane generated by the focusing optical system (28) corresponds with or deviates from a signal recovering surface (38), i.e. the plane with maximal interference contrast, generated by the radiation reflected by the reference mirror (32).

**Revendications**

1. Procédé pour l'acquisition de données de contour et/ou des propriétés optiques d'un objet tridimensionnel semi-transparent (14), en particulier d'un objet semi-transparent dans le domaine dentaire tel qu'une dent ou une restauration de dent, basé sur une mesure d'interférences et/ou d'autocorrélation, sachant

- qu'un faisceau lumineux (22) est émis par au moins une source lumineuse (16) à courte longueur de cohérence,
- que le faisceau lumineux traverse un séparateur de faisceaux (24) et est dirigé sur l'objet (14) par une optique focalisatrice (28),
- que dans le séparateur de faisceaux, un faisceau de référence (30) est détaché du faisceau lumineux et réfléchi par un miroir de référence (32) mobile le long du faisceau de référence, et qu'en déplaçant le miroir de référence est définie une position d'une surface d'acquisition de signaux (38) relativement à l'objet (14), et
- que le faisceau réfléchi par l'objet et par le miroir de référence est concentré dans le séparateur de faisceaux et superposé dans un capteur d'image (42) présentant un pixel (46, 47, 49), et que lorsque l'objet traverse la surface d'acquisition de signaux, des modèles de signaux modifiés dans le temps et/ou dans l'espace peuvent être détectés,

**caractérisé en ce**

qu'avant d'atteindre le séparateur de faisceaux (24), le faisceau lumineux (22) est divisé en rayons lumineux individuels (43, 45) parallèles mutuellement distants, sachant que la distance entre les rayons individuels est telle qu'une incidence de rayons individuels réfléchis sur des pixels (46, 49) directement voisins du capteur d'image (42) ne se produit pas.

2. Procédé selon la revendication 1,
**caractérisé en ce**
la distance entre les rayons lumineux individuels (43, 45) est réglée de telle manière que deux rayons lumineux individuels directement voisins frappent des pixels (46, 47) et/ou des zones de pixels entre lesquels au moins un pixel, de préférence 2 à 5 pixels n'est/ne sont pas atteint(s) par un rayon lumineux individuel réfléchi.

3. Procédé selon la revendication 1,
**caractérisé en ce**
**que** pour déterminer le contour et/ou les propriétés optiques de l'objet (14) est effectuée une mesure différentielle avec au moins deux longueurs d'onde différentes pour lesquelles l'objet présente des coefficients de dispersion et d'absorption différents.

4. Procédé selon la revendication 1,
**caractérisé en ce**
**qu'**est utilisée une source lumineuse (16) avec une longueur de cohérence $l_c$ dans la plage de 2 $\mu m \leq l_c \leq 20 \mu m$ pour une puissance d'émission $P_E$ de la source lumineuse dans la plage de 1 mW $\leq P_E \leq$ 100 mW, de préférence de 3 mW $\leq P_E \leq$ 50 mW.

5. Procédé selon la revendication 1,
**caractérisé en ce**
**qu'**est utilisée comme source lumineuse (16) de la lumière blanche et/ou au moins une diode supraluminescente et/ou un agencement de diodes supraluminescentes et/ou au moins une diode électroluminescente de grande puissance à large bande et/ou un agencement de plusieurs diodes électroluminescentes de grande puissance à large bande.

6. Procédé selon la revendication 1,
**caractérisé en ce**
**que** la lumière à courte longueur de cohérence, en particulier en cas d'utilisation d'une unique source lumineuse ou d'un faible nombre de sources lumineuses (16), est élargie par un étaleur de faisceau (18) et projetée sur un système de lentilles (20) afin de créer un faisceau lumineux (22) présentant une multitude de rayons lumineux individuels parallèles.

7. Procédé selon la revendication 1 ou 6,
**caractérisé en ce**
**que** la multitude de rayons individuels est directement créée dans un agencement de VCSEL.

**8.** Procédé selon la revendication 1, **caractérisé en ce qu'**est utilisée comme source lumineuse une combinaison de plusieurs diodes laser avec des longueurs d'onde centrales décalées les unes par rapport aux autres, sachant qu'un décalage de longueur d'onde $\Delta\lambda$ se situe dans la plage de 5 nm $\leq\Delta\lambda\leq$ 150 nm, de préférence de 10 nm $\leq\Delta\lambda\leq$ 50 nm.

**9.** Procédé selon la revendication 1, **caractérisé en ce qu'**une multitude de contenus d'images du capteur d'image, par exemple des modèles de signaux, saisis lors du déplacement du miroir de références (32) pendant un période de temps, c'est-à-dire pendant le temps d'échantillonnage, sont enregistrés dans la mémoire d'un ordinateur de traitement d'images et compensés les uns avec les autres.

**10.** Procédé selon la revendication 1, **caractérisé en ce que** le faisceau lumineux (22) est déplacé de fractions de la distance entre deux rayons individuels au moyen d'un décaleur de faisceau (26).

**11.** Procédé selon la revendication 10, **caractérisé en ce que** le décaleur de faisceau (26) formé dans le plan X-Y par une plaque à faces planes et parallèles et qui constitue un plan perpendiculaire à la direction du faisceau, est légèrement incliné.

**12.** Procédé selon la revendication 1, **caractérisé en ce qu'**un capteur CMOS est utilisé comme capteur d'image (42).

**13.** Procédé selon la revendication 1, **caractérisé en ce qu'**un capteur CCD est utilisé comme capteur d'image (42).

**14.** Procédé selon la revendication 1, **caractérisé en ce que** des détecteurs InAs ou HgCdTe sont utilisés comme capteurs.

**15.** Procédé selon au moins l'une des revendications précédentes, **caractérisé en ce qu'**est utilisée une source lumineuse (16) émettant dans le domaine spectral de l'infrarouge proche, de préférence entre 700 nm et 1000 nm.

**16.** Procédé selon la revendication 1, **caractérisé en ce qu'**est utilisée une variante RVB d'un capteur CMOS pour l'utilisation simultanée de deux ou plus longueurs d'onde des rayons lumineux, sachent que l'information alors fournie sur la profondeur peut également être utilisée pour diagnostiquer des caries.

**17.** Procédé selon la revendication 1, **caractérisé en ce que** le positionnement du faisceau est assuré par un faisceau de fibres monomodes à faible dispersion, sachant qu'après expansion, la lumière de la source lumineuse est liée dans une multitude de fibres parallèles et déliée par une optique focalisatrice.

**18.** Procédé selon la revendication 1, **caractérisé en ce que** pour l'extraction des données de contour est utilisée une connaissance a priori sous forme de combinaisons typiques de facteurs de dispersion, d'absorption et d'anisotropie des matériaux semi-transparents en question, qui sont enregistrées dans une base de données.

**19.** Procédé selon la revendication 1, **caractérisé en ce que** les données déterminées sur la base de classes de contours pour des objets à explorer sont évaluées ou pondérées et/ou munies d'une priorité.

**20.** Procédé selon la revendication 1, **caractérisé en ce que** la surface d'acquisition de signaux (38), c'est-à-dire le plan présentant le contraste interférentiel maximal, est réglé en concordance avec le plan focal de l'optique focalisatrice (28).

**21.** Procédé selon la revendication 1, **caractérisé en ce que** la surface d'acquisition de signaux (38) pour obtenir des informations supplémentaires sur la diffusion de l'objet semi-transparent (24) pour le traitement d'images ultérieur s'écarte du plan focal créé par l'optique focalisatrice (28).

**22.** Procédé selon la revendication 1, **caractérisé en ce qu'**un rayonnement diffusé provenant de l'objet semi-transparent (14) est détecté avec des pixels (49) qui ne sont pas directement éclairés par des rayons lumineux individuels (43, 45).

**23.** Dispositif pour l'acquisition de données de contour et/ou des propriétés optiques d'un objet tridimensionnel semi-transparent (14), en particulier d'un objet semi-transparent dans le domaine dentaire tel qu'une dent ou une restauration de dent, comprenant au moins une source lumineuse (16) de courte longueur de cohérence pour émettre un faisceau lumineux (22), un séparateur de faisceaux (24) divisant le faisceau lumineux d'une part en une partie de rayonnement dirigée sur l'objet en passant par une optique focalisatrice (28), et d'autre part en une partie de rayonnement dirigée sur un miroir de référence (32) réglable, ainsi qu'un capteur d'image (42) présentant un pixel (46, 47) et qui peut être alimenté par le rayonnement réfléchi par l'objet et le miroir de référence ainsi que par le rayonnement concentré par le séparateur de faisceaux,

**caractérisé en ce**

**qu'**entre la source lumineuse (16) et le séparateur de faisceaux (24) est disposé un élément optique (20) divisant le faisceau lumineux (22) en rayons lumineux individuels (43, 45) parallèles mutuellement distants, ou que la source lumineuse (16) est conçue pour émettre le faisceau lumineux (22) constitué d'une multitude de rayons lumineux individuels parallèles, sachant que la distance entre les rayons individuels est telle qu'une incidence de rayons individuels réfléchis sur des pixels (46, 49) directement voisins du capteur d'image (42) ne se produit pas.

24. Dispositif selon la revendication 23,
**caractérisé en ce**
**que** la source lumineuse (16) présente une unique source lumineuse ou plusieurs sources lumineuses, sachant qu'en aval de l'unique source lumineuse ou des sources lumineuses est placé un étaleur de faisceau (18) pour élargir le faisceau lumineux (22) et un système de lentilles (20) pour créer le faisceau lumineux (22) présentant les plusieurs rayons lumineux individuels parallèles.

25. Dispositif selon la revendication 23,
**caractérisé en ce**
**que** sur la trajectoire du faisceau lumineux (22) est disposé un décaleur de faisceau (26) en amont du séparateur de faisceaux (24).

26. Dispositif selon la revendication 25,
**caractérisé en ce**
**que** le décaleur de faisceau (26) est formé par une plaque à faces planes et parallèles qui peut être légèrement inclinée dans les directions X et Y perpendiculairement à la direction du faisceau.

27. Dispositif selon la revendication 23,
**caractérisé en ce**
**que** la source lumineuse (16) est une source lumineuse émettant de la lumière blanche.

28. Dispositif selon la revendication 23,
**caractérisé en ce**
**que** la source lumineuse (16) est une diode supraluminescente ou un agencement de diodes supraluminescentes.

29. Dispositif selon la revendication 23,
**caractérisé en ce**
**que** la source lumineuse (16) est une diode électroluminescente de grande puissance ou un agencement de plusieurs diodes électroluminescentes de grande puissance à bande relativement large.

30. Dispositif selon la revendication 23,
**caractérisé en ce**
**que** la source lumineuse (16) est une combinaison de plusieurs diodes laser avec des longueurs d'onde centrales décalées les unes par rapport aux autres, sachant que le décalage de longueur d'onde $\Delta\lambda$ se situe dans la plage de 5 nm $\leq \Delta\lambda \leq$ 150 nm, de préférence de 10 nm $\leq \Delta\lambda \leq$ 50 nm.

31. Dispositif selon la revendication 23,
**caractérisé en ce**
**que** la longueur de cohérence de la source lumineuse (16) se situe dans la plage de 2 $\mu$m $\leq I_c \leq$ 20 $\mu$m pour une puissance d'émission $P_E$ de la source lumineuse dans la plage de 1 mW $\leq P_E \leq$ 100 mW, de préférence de 3 mW $\leq P_E \leq$ 50 mW.

32. Dispositif selon la revendication 23,
**caractérisé en ce**
**que** la source lumineuse (16) est formée par un agencement de VCSEL.

33. Dispositif selon la revendication 23,
**caractérisé en ce**
**que** le dispositif présente un élément solidaire (52) qui permet un changement axial simultané de la longueur du bras de référence (36) et une modification de la distance entre le miroir de référence (32) et le séparateur de faisceaux (24) lors du déplacement de la lentille focalisatrice (28).

34. Dispositif selon la revendication 33,
**caractérisé en ce**
**que** dans l'élément solidaire (52) est prévu un système de miroirs (56) pour dévier le faisceau de référence.

35. Dispositif selon la revendication 23,
**caractérisé en ce**
**que** l'étaleur de faisceau (18) est relié au séparateur de faisceaux (24), formé par un coupleur de fibres, au moyen d'une multitude de fibres parallèles telles qu'un faisceau monomode à faible dispersion.

36. Dispositif selon la revendication 35,
**caractérisé en ce**
**que** le séparateur de faisceaux (24) est formé par un guide d'ondes multiplanaire.

37. Dispositif selon la revendication 23,
**caractérisé en ce**
**que** le plan focal créé par l'optique focalisatrice (28) coïncide avec ou s'écarte d'une surface d'acquisition de signaux (38) créée par un rayon réfléchi par le miroir de référence (32), c'est-à-dire le plan présentant le contraste interférentiel maximal.

10

14   58

12   26   22

28

40

30

32   L   24   16

34   36   20   18

42

Fig. 1

47   46
49   48

14

44   I

43   45

42

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4309056 A
- DE 4034007 A
- US 6697194 B
- US 6697194 B1
- WO 9533971 A
- US 5321501 A

**In der Beschreibung aufgeführte Nicht-Patentliteratur**

- **PROF. DR. G. HÄUSLER.** KOHÄRENZRADAR'' - ein optischer 3D-Sensor mit einer Genauigkeit von 1 $\mu$m. *INFO BÖRSE LASER,* April 1999